# EUROPEAN PATENT SPECIFICATION

(11) **EP 4 628 937 B1**
(45) Date of publication and mention of the grant of the patent: **25.11.2026**
(21) Application number: 24215040.7
(22) Date of filing: 25.11.2024
(51) Int. Cl.: G01S 15/86, G01S 15/89, G01S 15/931, G06V 20/56, G06V 10/80, G06V 20/58, G01S 15/87

(54) **SENSOR FUSION APPARATUS AND METHOD FOR TRANSPORTATION APPARATUS**
SENSORFUSIONSVORRICHTUNG UND VERFAHREN FÜR EINE TRANSPORTVORRICHTUNG
APPAREIL DE FUSION DE CAPTEURS ET PROCÉDÉ POUR APPAREIL DE TRANSPORT

(30) Priority: 04.04.2024 KR 20240045985
(43) Date of publication of application: 08.10.2025
(73) Proprietor: Hyundai Mobis Co., Ltd., Gangnam-gu Seoul 06141 (KR)
(72) Inventor: SON, Dong Yun, 16891 Yongin-si, Gyeonggi-do (KR); KIM, Ji Su, 16891 Yongin-si, Gyeonggi-do (KR)
(74) Representative: Jung, Minkyu

(56) References cited:
- EP-A1- 4 067 930
- WO-A1-2020/069025
- DE-A1- 102020 205 683
- DE-A1- 102022 121 109

## Description

### BACKGROUND

### FIELD

Exemplary embodiments of the present disclosure relate to sensor fusion apparatus and method for a transportation apparatus, which may enable fusion of an ultrasonic sensor and a camera sensor mounted on the transportation apparatus by using a grid map.

### DISCUSSION OF THE BACKGROUND

In general, a parking assistance system (Remote Smart Parking Assis, RSPA) of a transportation apparatus (e.g., a vehicle and the like) for transporting people or cargo uses an ultrasonic sensor to enable a vehicle to identify a parking space on its own and assists in parking by controlling steering, braking, speed, forward/reverse gear shifting, and the like.

In this way, the conventional parking assistance system (RSPA) identifies an object, such as a nearby vehicle, based on the ultrasonic sensor, and then executes parking while steering to avoid the identified object.

However, because the ultrasonic sensor alone does not provide high accuracy in obstacle identification, a method that detects an obstacle by fusing sensing values from a camera sensor has also been used to improve identification accuracy.

In this case, the conventional sensor fusion method uses the Probabilistic Data Association Filter (PDAF). However, the complexity of the mathematical equations involved in the PDAF imposes high computational load on a processor (controller), which may cause a reset due to computational overload. In addition, the excessive computational load makes it difficult to add a new feature and enhance performance.

Therefore, there is a need for a method that may reduce computational load, compared to the conventional method, when fusing sensing data from the ultrasonic sensor and image data from the camera sensor.

The related art of the present disclosure is disclosed in Korean Patent Application Publication No. 10-2022-0092738 (published on July 4, 2022).

EP 4 067 930 A1 describes a method for mapping a vehicle environment of a vehicle that combine the object classifications determined by semantic sensor systems such as camera systems, with high accuracy and reliability of active positioning systems, such as ultrasound systems. The method includes merging the information from the occupancy grid with information from the transformed semantic grid by using the joint probability rule.

WO 202/069025 A1 describes a method for estimating spatial information (e.g., occupancy, occlusion, and/or free space) in an environment based at least in part on radar sensor data captured by a radar system.

DE 10 2020 205 683 A1 relates a method for determining the position of an object using ultrasound, in which ultrasound pulses are emitted by at least two ultrasound sensors.

DE 10 2022 121109 A1 relates to a method for automatic visual perception using a vehicle.

### SUMMARY

An objective of the present disclosure is to provide sensor fusion apparatus and method for a transportation apparatus, which may enable fusion of an ultrasonic sensor and a camera sensor mounted on the transportation apparatus by using a grid map. According to the present invention, a sensor fusion apparatus for a transportation apparatus and a sensor fusion method for a transportation apparatus are set forth in the independent claims. Preferred embodiments are provided in the dependent claims.

According to an aspect of the present disclosure, a sensor fusion apparatus for a transportation apparatus includes: at least two sensors having different characteristics; a first preprocessing module and a second preprocessing module performing grid mapping for each object through preprocessing, corresponding to the at least two sensors having different characteristics, respectively; and a processor performing sensor fusion through clustering using an integrated grid map for the each object grid-mapped by the first preprocessing module and the second preprocessing module.

In the present disclosure, the first preprocessing module performs Time of Flight (TOF) preprocessing and grid mapping for an object detected through an ultrasonic sensor, which is a first sensor, and the second preprocessing module performs object detection(OD) preprocessing and grid mapping for an object detected through a camera sensor, which is a second sensor.

In the present disclosure, the processor performs clustering through an intersection of an object calculated through the first preprocessing module and object box gating of an object calculated through the second preprocessing module, by using the integrated grid map.

In the present disclosure, the processor searches for occupancy scores of grids within an object box (OD_Box) and performs clustering with the average value of grids having the highest scores within the object box to calculate a final fusion representative point.

In the present disclosure, the processor determines the object box to be a ghost and deletes the same, if there is no grid mapping information from the first sensor accumulated within the object box.

In the present disclosure, the processor acquires a Time of Flight (TOF) value of a direct wave and a TOF value of an indirect wave detected through the first sensor by using the first preprocessing module, and performs grid mapping aligned with a field of view (FOV) of the first sensor, if there is a direct wave value among the TOF values acquired through the first sensor.

In the present disclosure, the processor performs grid mapping only on an intersection area of direct and indirect waves, if there is a TOF value of an indirect wave among the TOF values acquired through the first sensor.

In the present disclosure, the processor acquires object detection information from image data detected through the second sensor by using the second preprocessing module, and corrects a coordinate value and an area value based on a specified parameter by using a specified filter and then performs grid mapping in the form of a box if objects are confirmed to be the same through comparison of previous and current values of the object detection information.

In the present disclosure, the processor integrates grid mapping information on the intersection area of direct and indirect waves among TOF values acquired through a first sensor and grid mapping information in the form of an object box on object detection information detected through a second sensor, and maps all the information on a single integrated grid map.

According to another aspect of the present disclosure, the sensor fusion method for a transportation apparatus includes: performing, by a processor, preprocessing and grid mapping corresponding to a first sensor and a second sensor, respectively, by using a first preprocessing module and a second preprocessing module; and performing, by the processor, sensor fusion through clustering using an integrated grid map for each object information preprocessed and grid-mapped by the first preprocessing module and the second preprocessing module.

In the present disclosure, in the performing of grid mapping, the first preprocessing module performs Time of Flight (TOF) preprocessing and grid mapping for an object detected through an ultrasonic sensor, which is a first sensor, and the second preprocessing module performs object detection (OD) preprocessing and grid mapping for an object detected through a camera sensor, which is a second sensor.

In the present disclosure, in the performing of sensor fusion, the processor performs clustering through an intersection of an object calculated through the first preprocessing module and object box gating of an object calculated through the second preprocessing module, by using the integrated grid map.

In the present disclosure, in the performing of sensor fusion, the processor searches for occupancy scores of grids within an object box (OD_Box) and performs clustering with the average value of grids having the highest scores within the object box to calculate a final fusion representative point.

In the present disclosure, in the performing of sensor fusion, the processor determines the object box to be a ghost and deletes the same, if there is no grid mapping information from the first sensor accumulated within the object box.

In the present disclosure, in the performing of sensor fusion, the processor acquires a Time of Flight (TOF) value of a direct wave and a TOF value of an indirect wave detected through the first sensor by using the first preprocessing module, and performs grid mapping aligned with a field of view (FOV) of the first sensor, if there is a direct wave value among the TOF values acquired through the first sensor.

In the present disclosure, in the performing of grid mapping, the processor performs grid mapping only on an intersection area of direct and indirect waves, if there is a TOF value of an indirect wave value among the TOF values acquired through the first sensor.

In the present disclosure, in the performing of grid mapping, the processor acquires object detection information from image data detected through the second sensor by using the second preprocessing module, and corrects a coordinate value and an area value based on a specified parameter by using a specified filter and then performs grid mapping in the form of a box if objects are confirmed to be the same through comparison of previous and current values of the object detection information.

In the present disclosure, in the performing of sensor fusion, the processor integrates grid mapping information on the intersection area of direct and indirect waves among TOF values acquired through a first sensor and grid mapping information in the form of an object box on object detection information detected through a second sensor, and maps all the information on a single integrated grid map.

The present disclosure may improve identification accuracy through robustness against noise compared to the conventional apparatus and method by utilizing an FOV of the ultrasonic sensor and an intersection area of the direct wave when fusing the ultrasonic sensor and the camera sensor mounted on the transportation apparatus by using a grid map.

The present disclosure may reduce computational load on the processor compared to the conventional apparatus and method by performing sensor fusion through a simple mathematical model when fusing sensing data from the ultrasonic sensor mounted on the transportation apparatus and image data from the camera sensor mounted on the transportation apparatus by using a grid map.

### BRIEF DESCRIPTION OF THE DRAWINGS

FIG. 1 is an exemplary view showing a schematic configuration of a sensor fusion apparatus for a transportation apparatus according to an embodiment of the present disclosure.
FIG. 2 is an exemplary view illustrating a sensor fusion method for a transportation apparatus according to an embodiment of the present disclosure.
FIG. 3 is an exemplary view illustrating operations of preprocessing and grid mapping for an object detected through a first sensor and a second sensor in FIG. 2.
FIG. 4 is an exemplary view illustrating operations of preprocessing and multi-grid mapping for an object detected through the first sensor and the second sensor in FIG. 2.
FIG. 5 is an exemplary view illustrating grid mapping for direct and indirect waves detected through the first sensor (ultrasonic sensor) in FIG. 2.
FIG. 6 is an exemplary view illustrating object detection (OD) preprocessing and grid mapping for an object detected through the second sensor (camera sensor) in FIG. 2.
FIG. 7 is an exemplary view illustrating a method for calculating a sensor fusion coordinate of an object on a grid map during the multi-grid mapping operation in FIG. 4.
FIGS. 8 to 10 are exemplary views illustrating an improved effect of sensor fusion according to an embodiment of the present disclosure compared to conventional sensor fusion.

### DETAILED DESCRIPTION OF THE ILLUSTRATED EMBODIMENTS

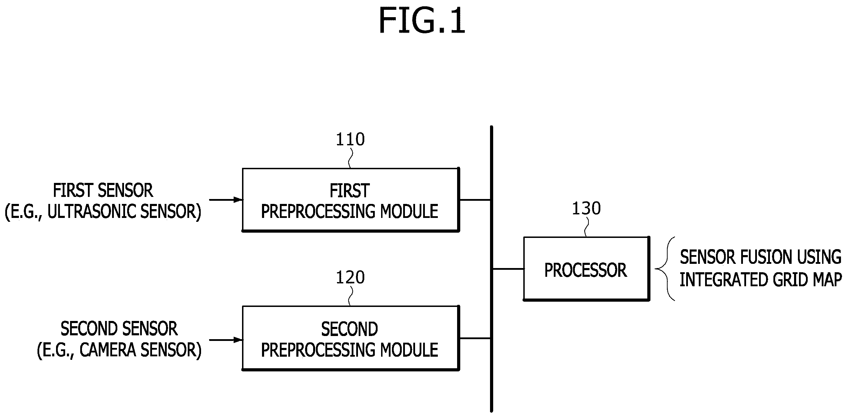

FIG. 1 is an exemplary view showing a schematic configuration of a sensor fusion apparatus for a transportation apparatus according to an embodiment of the present disclosure.

As illustrated in FIG. 1, the sensor fusion apparatus for a transportation apparatus according to the present embodiment includes at least two sensors (a first sensor and a second sensor) having different characteristics, a first preprocessing module 110 and a second preprocessing module 120 performing preprocessing, corresponding to the at least two sensors (the first sensor and the second sensor), respectively, and a processor 130 performing sensor fusion by using an integrated grid map.

A grid map refers to a map in which Time of Flight (i.e., TOF, distance value) information of an object is accumulated in each grid (cell) through an ultrasonic sensor.

Among the at least two sensors, the first sensor includes an ultrasonic sensor detecting an object by using ultrasonic waves, and the second sensor includes a camera sensor.

The first preprocessing module 110 preprocesses signals (sensing data) of the object (e.g., a person, a car, an obstacle, and the like) detected by the first sensor (e.g., an ultrasonic sensor).

The first preprocessing module 110 performs Time of Flight (i.e., TOF, distance value) preprocessing and grid mapping for the object.

The second preprocessing module 120 preprocesses signals (image data) of an object detected through the second sensor (e.g., a camera sensor).

The second preprocessing module 120 performs object detection (OD) preprocessing and grid mapping for the object.

The processor 130 uses the integrated grid map to perform sensor fusion on the signals (sensing data and image data) preprocessed through the first preprocessing module 110 and the second preprocessing module 120, respectively.

The processor 130 uses the integrated grid map to perform clustering through an intersection of target information (i.e., an object) calculated through the first preprocessing module 110 and object box gating (i.e., OD_Box_Gating, inserting object information in the form of a box on the grid map) of target information (i.e., object information) calculated through the second preprocessing module 120.

The processor 130 clusters the largest values among the grid mapping information from the first sensor (i.e., grid mapping information on an intersection area of direct and indirect waves acquired through the first sensor (e.g., an ultrasonic sensor)) accumulated within an object box (OD_Box) to calculate a final coordinate (i.e., a final object coordinate).

If there is no grid mapping information from the first sensor (i.e., grid mapping information on an intersection area of direct and indirect waves acquired through the first sensor (e.g., an ultrasonic sensor)) accumulated within an object box (OD_Box), the processor 130 determines the object box to be a ghost and deletes the same.

For reference, when the first sensor (e.g., an ultrasonic sensor) is grid-mapped on a grid map, direct wave information (i.e., (information characterized by ultrasonic waves forming a circular pattern due to identical Time of Flight (TOF) values for transmitted and received ultrasonic waves) and indirect wave information (i.e., information characterized by ultrasonic waves forming an elliptical pattern due to different Time of Flight (TOF) values for transmitted and received ultrasonic waves) are displayed together on the same grid map. In this case, the ultrasonic sensor has a constant field of view (FOV).

The sensor fusion method of the processor 130 will be described below.

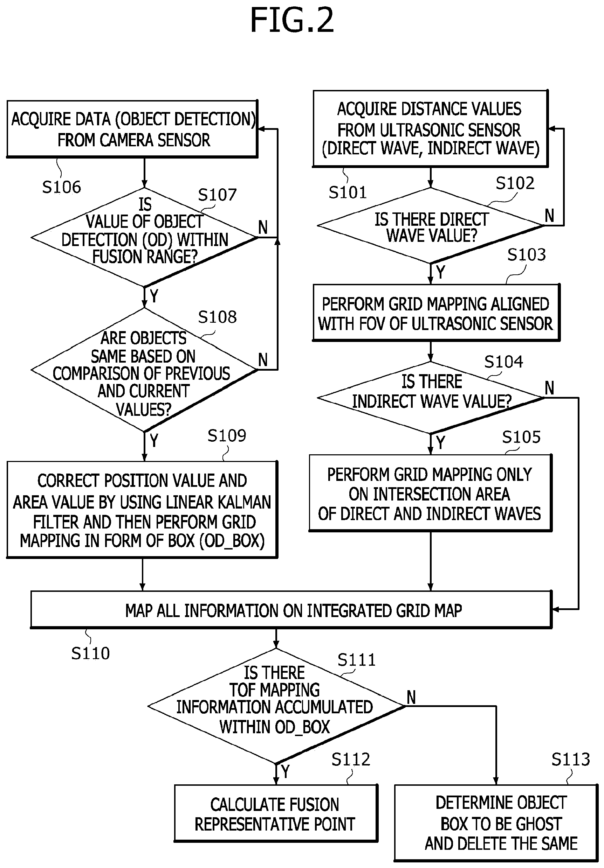

FIG. 2 is an exemplary view illustrating a sensor fusion method for a transportation apparatus according to an embodiment of the present disclosure.

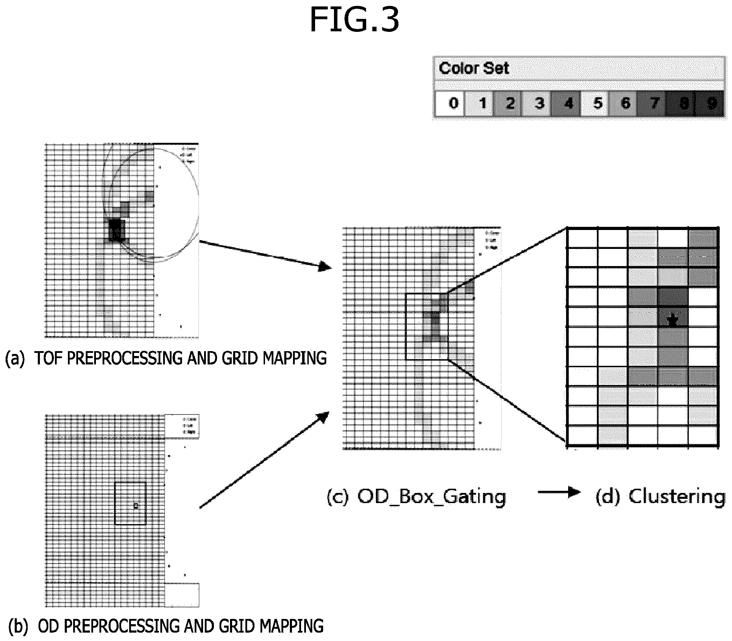

FIG. 3 is an exemplary view illustrating operations of preprocessing and grid mapping for an object detected through a first sensor and a second sensor in FIG. 2.

Referring to FIG. 2, the processor 130 acquires distance values (e.g., TOF of a direct wave and TOF of an indirect wave) from the first sensor (e.g., an ultrasonic sensor) through the first preprocessing module 110 (S101).

The processor 130 checks whether there is a direct wave value among the distance values acquired through the first sensor (e.g., an ultrasonic sensor) (S102).

If there is a direct wave value among the distance values acquired through the first sensor (e.g., an ultrasonic sensor) (Yes in S102), the processor 130 performs grid mapping aligned with an FOV of the first sensor (e.g., an ultrasonic sensor) (S103) (see (a) in FIG. 3).

The processor 130 checks whether there is an indirect wave value among the distance values acquired through the first sensor (e.g., an ultrasonic sensor) (S104).

If there is an indirect wave value among the distance values acquired through the first sensor (e.g., an ultrasonic sensor) (Yes in S104), the processor 130 performs grid mapping only on an intersection area of direct and indirect waves (S105) (see (a) in FIG. 3).

The processor 130 acquires object detection information (i.e., OD data) from image data detected through the second sensor (e.g., a camera sensor) by using the second preprocessing module 120 (S106).

The processor 130 checks whether a value of object detection information (i.e., OD data) detected through the second sensor (e.g., a camera sensor) is within a fusion range (S107). For example, the processor 130 checks whether there is an intersection of direct and indirect waves within an object box (OD_Box).

If the value of the object detection information (i.e., OD data) detected through the second sensor (e.g., a camera sensor) is within a specified fusion range (Yes in S107), the processor 130 checks whether objects are the same through comparison of previous and current values of the object detection information (i.e., OD data) (S108).

If the value of the object detection information (i.e., OD data) detected through the second sensor (e.g., a camera sensor) is within a specified fusion range, and if objects are determined to be the same through comparison of previous and current values of the object detection information (i.e., OD data) (e.g., Yes in S108), the processor 130 corrects a coordinate value and an area value based on a specified parameter by using a specified filter (e.g., a linear Kalman filter) and then performs grid mapping in the form of a box (i.e., OD_Box) (S109) (see (b) in FIG. 3).

The processor 130 integrates grid mapping information on an intersection area of direct and indirect waves among distance values acquired through the first sensor (e.g., an ultrasonic sensor) and grid mapping information in the form of a box (i.e., OD_Box, object box) on object detection information (i.e., OD data) detected through the second sensor (e.g., a camera sensor), and maps all the information on a single integrated grid map (S110) (see (c) of FIG. 3).

Based on all the information mapped on the integrated grid map, the processor 130 checks whether there is grid mapping information from the first sensor (i.e., grid mapping information on an intersection area of direct and indirect waves acquired through the first sensor (e.g., an ultrasonic sensor)) accumulated within a box (i.e., OD_Box, object box) for object detection information (i.e., OD data) (S111).

If there is grid mapping information from the first sensor (i.e., grid mapping information on an intersection area of direct and indirect waves acquired through the first sensor (e.g., an ultrasonic sensor)) accumulated within an object box (OD_Box)) (Yes in S111), the processor 130 clusters the largest values (e.g., a plurality of grids with the same largest value) among the grid mapping information from the first sensor accumulated to calculate a final coordinate (i.e., a final object coordinate or a fusion representative point)(S112).

If there is no grid mapping information from the first sensor (i.e., grid mapping information on an intersection area of direct and indirect waves acquired through the first sensor (e.g., an ultrasonic sensor)) accumulated within an object box (OD_Box)) (No in S111), the processor 130 determines the object box (OD_Box) to be a ghost and deletes the same (S113).

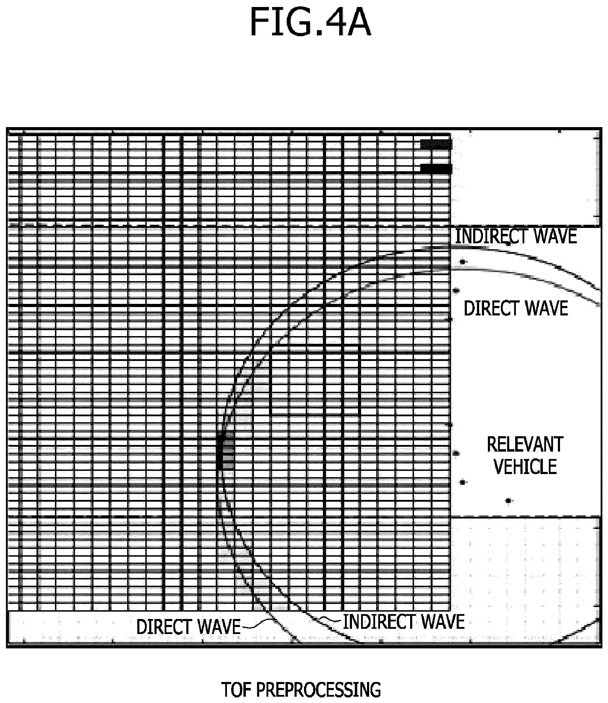

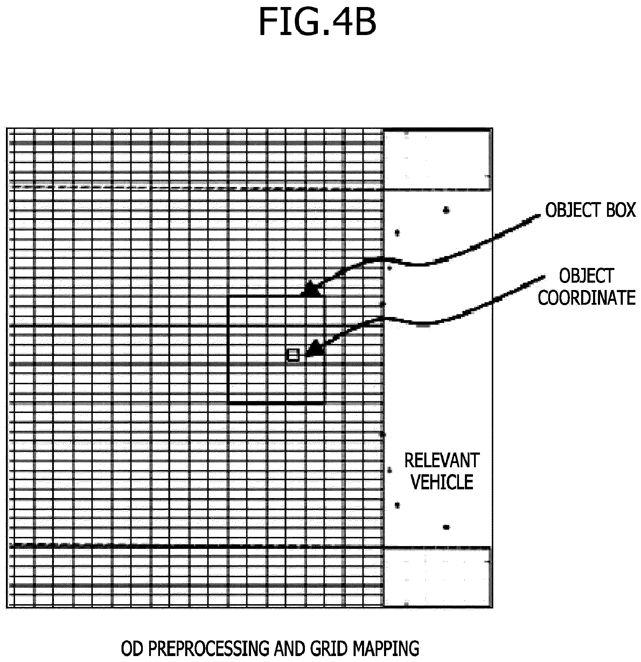

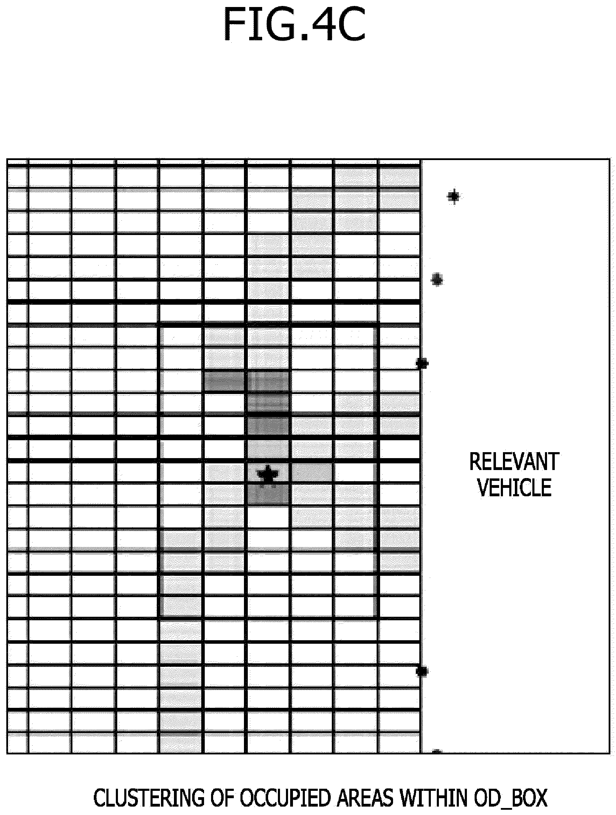

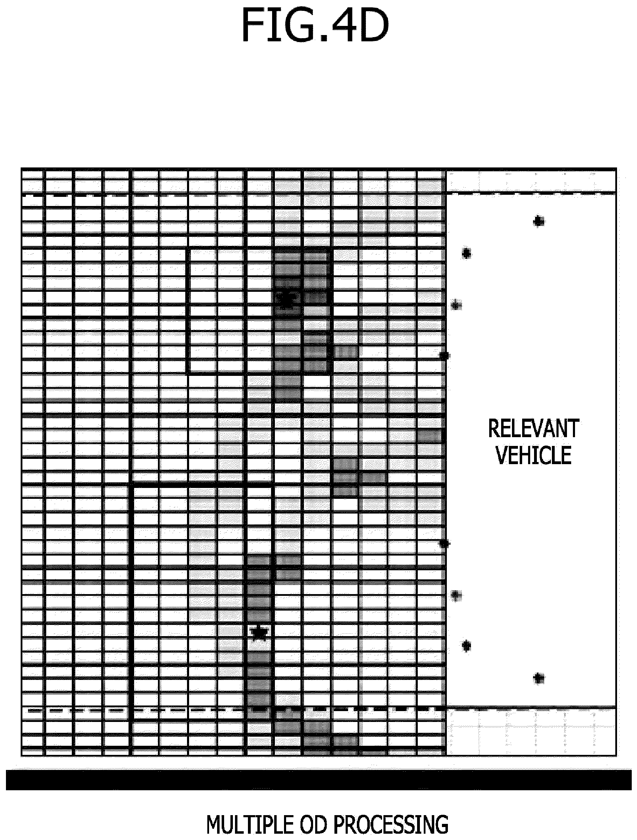

FIG. 4 is an exemplary view illustrating operations of preprocessing and multi-grid mapping for an object detected through the first sensor and the second sensor in FIG. 2.

Referring to FIG. 4, the processor 130 assigns a specified score only to an area (or grid), which is within the FOV, among direct waves of the first sensor (e.g., an ultrasonic sensor) through TOF preprocessing (a), and assigns a score only to an area (or grid) where an intersection with the direct wave is formed among the indirect wave information.

The processor 130 determines whether the objects are the same by comparing previous and current values of an object coordinate (OD coordinate) through OD preprocessing (b) (e.g., by comparing to determine whether a change in the object coordinate is within a specified range), corrects a coordinate value and an area value by using a specified filter (e.g., a linear Kalman filter), and then performs grid mapping in the form of a box (i.e., OD_Box). In this case, an index matching the corrected coordinate value is mapped on the grid map, and the index corresponding to the box (i.e., OD_Box, object box) is stored.

The processor 130 utilizes the index, which has been stored previously, corresponding to the object box (i.e., OD_Box) (start and end points of OD_Box) as a sensor fusion gate through clustering of occupied areas within the object box (i.e., OD_Box) (c).

For example, if there is no occupied area (i.e., grid mapping information on an intersection area of direct and indirect waves acquired through the first sensor (e.g., an ultrasonic sensor)) within the object box (i.e., OD_Box), the processor 130 determines the object box to be a ghost. If there is an occupied area (i.e., grid mapping information on an intersection area of direct and indirect waves acquired through the first sensor (e.g., an ultrasonic sensor)) within the object box (i.e., OD_Box) the processor 130 calculates (extracts) a final coordinate (i.e., a final object coordinate or a fusion representative point) through clustering.

The processor 130 may perform clustering processing for multiple objects through multiple OD processing (d).

For example, the processor 130 may set the number of clusters based on the number of object boxes (i.e., OD_Box). In this case, an initial centroid is the coordinate value of object detection information (i.e., OD data). The processor 130 then searches for the occupancy points (scores) within each object box (i.e., OD_Box), performs clustering with the average value of the largest values (scores, MaxPoint) within each object box (i.e., OD_Box), and calculates (extracts) a final coordinate (i.e., a final object coordinate or a fusion representative point) through clustering.

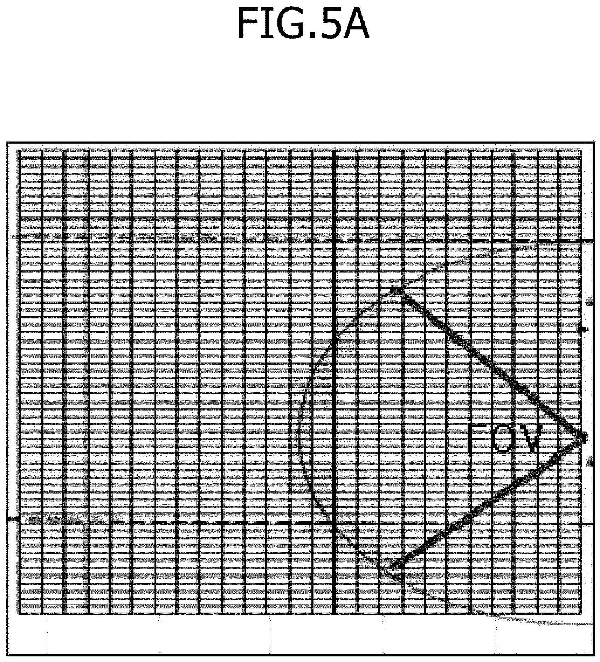

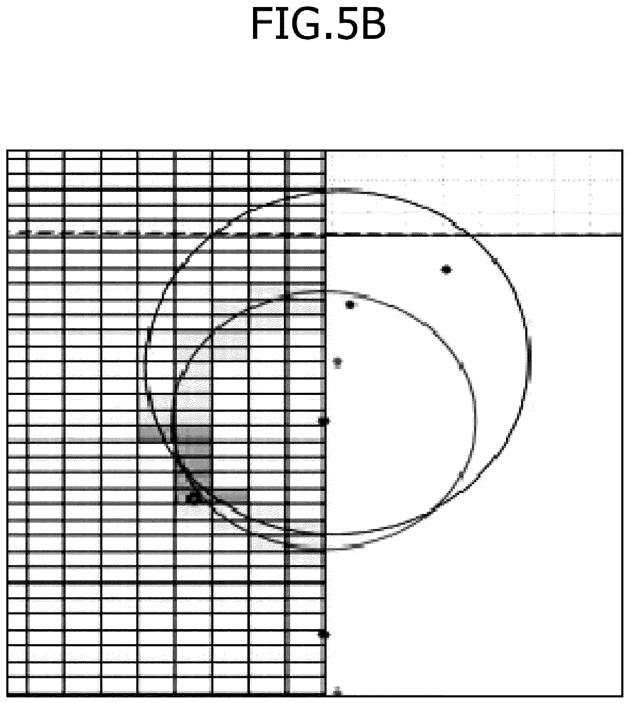

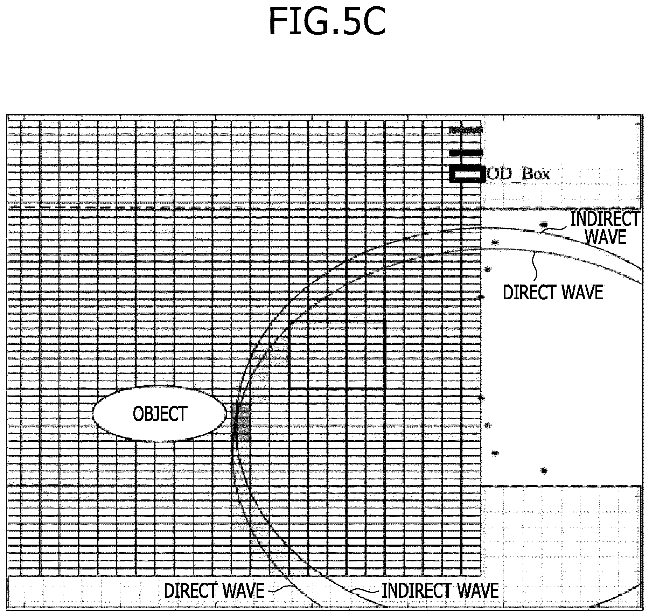

FIG. 5 is an exemplary view illustrating grid mapping for direct and indirect waves detected through the first sensor (ultrasonic sensor) in FIG. 2.

Referring to FIG. 5, for a direct wave (i.e., direct ultrasonic wave), the processor 130 performs grid mapping only on an area within the FOV of the first sensor (ultrasonic sensor). This is to prevent fusion of information outside the FOV with the OD (see (a) in FIG. 5).

Referring to FIG. 5, for an indirect wave (i.e., indirect ultrasonic wave), the processor 130 performs grid mapping only on an area where there is an intersection with a direct wave. This is because the intersection of direct and indirect waves is a reflection point of a target (see (b) in FIG. 5).

Referring to FIG. 5, the processor 130 performs grid mapping, based on a direct wave (i.e., only if a direct wave is detected), for the intersections with indirect waves through TOF preprocessing. This is to prevent incorrect fusion with another object not detected by direct waves.

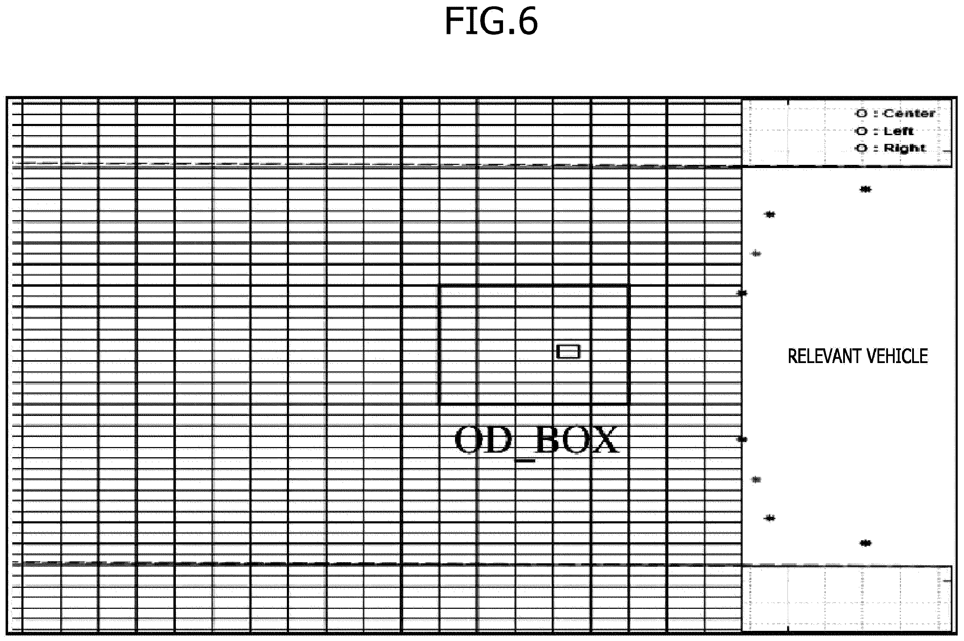

FIG. 6 is an exemplary view illustrating object detection (OD) preprocessing and grid mapping for an object detected through the second sensor (camera sensor) in FIG. 2.

The processor 130 selects objects, in order of proximity from a relevant vehicle, from object detection (OD) measurement values for each area (e.g., within the vehicle width and outside the vehicle width) based on a predetermined functional specification (e.g., image detection should detect up to 5 persons within the vehicle width and up to 3 persons each on the left and right outside the vehicle width, while sensor fusion should detect up to 3 persons in the vehicle width and up to 1 person each on the left and right outside the vehicle width).

When objects are selected, the processor 130 determines whether objects detected at specified time intervals corresponding to the movement of the vehicle are the same by comparing previous and current values of the selected objects. The comparison checks whether the values are within a specified range of position (coordinate) variation in order to determine whether the objects are the same.

For example, the processor 130 may determine that objects are the same when previous and current values of the selected objects are within a specified range of position (coordinate) variation, based on "(current position value - previous position value) ≤ speed (kph) X (0.02)." In image object detection with an update cycle of 66 ms, a distance that may be traveled in approximately 66 ms (distance = time × speed) may be calculated using (speed_kph) / (3.6) × 0.066, which simplifies to speed_kph × (0.0183). However, considering measurement errors, the factor 0.0183 is set to 0.02. Thus, if a difference between the current position (coordinate) and the previous position (coordinate) exceeds speed (kph) X (0.02), the objects may be determined to be different from each other. In addition, the reason for dividing the speed by 3.6 is to convert k/h into m/s. However, it should be noted that the calculation method described above is illustrative and is not intended to be limiting.

As described above, the same object is continuously measured through the second sensor, and when the object is within a sensor fusion range, a coordinate value and a width (i.e., area value) are corrected by using a specified filter (e.g., a linear Kalman filter). Grid mapping is then performed in the form of an object box (i.e., OD_Box).

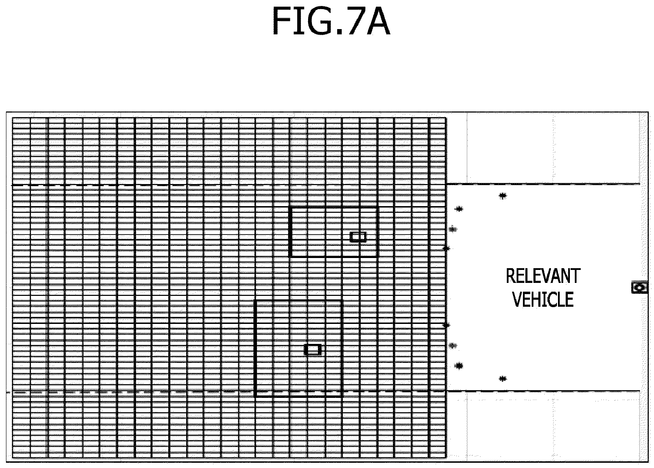

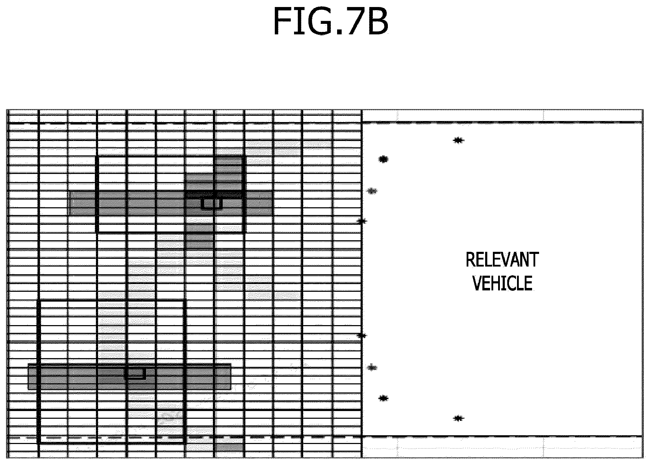

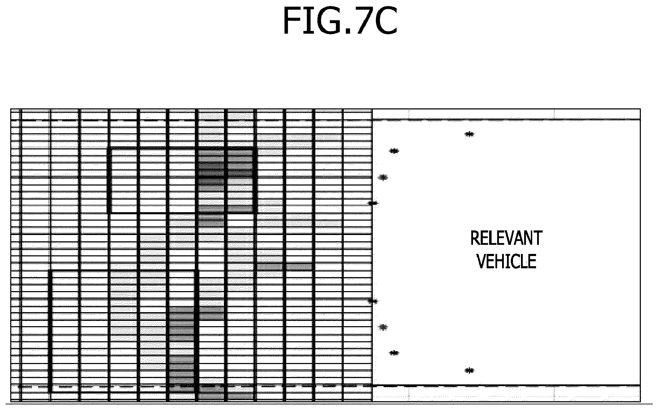

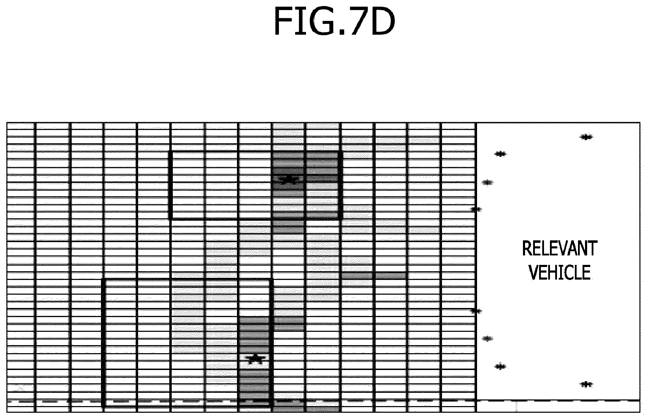

FIG. 7 is an exemplary view illustrating a method for calculating a sensor fusion coordinate of an object on a grid map during the multi-grid mapping operation in FIG. 4.

Referring to (a) in FIG. 7, the processor 130 may set the number of object boxes (i.e., OD_Box) using the number of clusters during the multi-grid mapping operation. For example, the number may be set to 3 within the vehicle width and 1 outside the vehicle width, and the setting may vary depending the predetermined functional specification.

Referring to (b) in FIG. 7, an initial centroid may be set using a coordinate value (e.g., the Y coordinate value) from the object detection information (i.e., OD data). For example, in (b) in FIG. 7, the area-colored red indicates the initial centroid.

Referring to (c) in FIG. 7, the processor 130 searches for the maximum occupancy point (score) and the number of occupancies within an object box (i.e., OD_Box). For example, in (c) in FIG. 7, the maximum occupancy point (score) is colored green, and the number of occupancies is 4.

Referring to (d) in FIG. 7, the processor 130 performs clustering with the average value of the maximum occupancy points (scores) within each object box (i.e., OD_Box), and calculates (extracts) a final coordinate (i.e., a final object coordinate or a fusion representative point) through clustering.

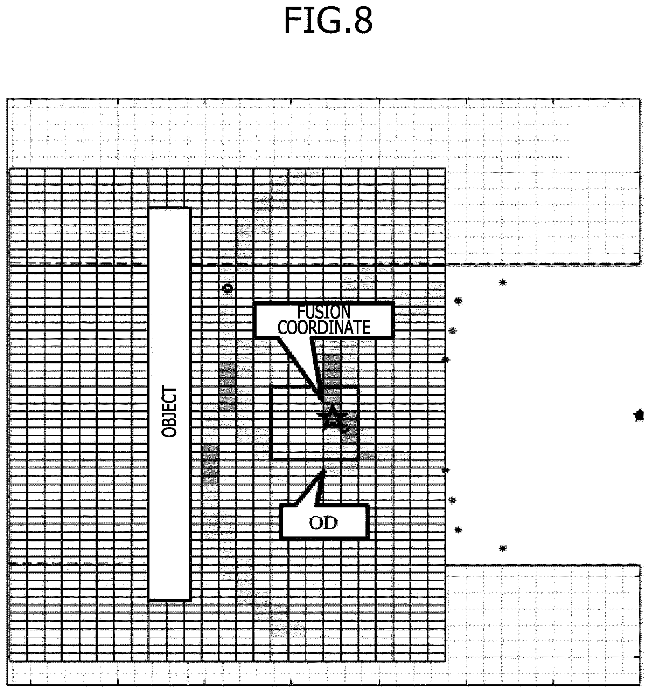

FIGS. 8 to 10 are exemplary views illustrating an improved effect of sensor fusion according to an embodiment of the present disclosure compared to conventional sensor fusion.

Although a figure describing a conventional sensor fusion method is not illustrated, the conventional method has calculated an object coordinate by compensating for a TOF value while fixing the angle between an object coordinate value detected through a camera sensor and an ultrasonic sensor position, and has performed sensor fusion by using the Probabilistic Data Association Filter (PDAF). In this case, if noisy TOF caused by another object near the object falls within a gating range, sensor fusion has been performed, thereby decreasing coordinate accuracy.

However, as illustrated in FIG. 8, in the present embodiment, sensor fusion is performed by utilizing only an intersection area of the direct wave within the FOV of the ultrasonic sensor (i.e., through a combination of OD and TOF), thereby making sensor fusion robust against noise and thus improving identification accuracy.

In addition, the conventional method has used the Mahalanobis distance to perform sensor fusion using probabilistic association. This is a method of calculating the Mahalanobis distance to associate an estimated value with a measured value, and then determining objects to be the same if the calculated distance falls within a specified parameter and correcting a position by using the Kalman Gain. Thus, in order to process complex mathematical formulas (probabilistic formulas), load on a processor (e.g., an MCU) increases.

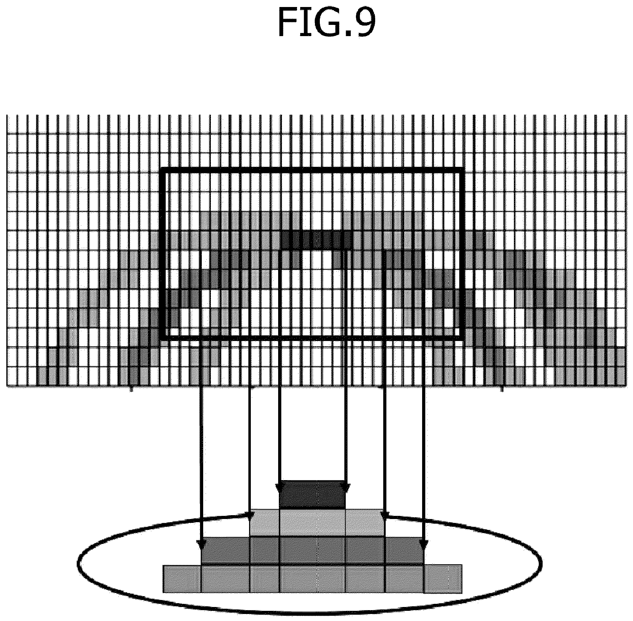

However, as illustrated in FIG. 9, the present embodiment reduces load on the processor (e.g., an MCU) by simply performing four arithmetic operations on grid scores (i.e., simplifying the mathematical model) instead of processing complex mathematical formulas (a probabilistic formula) after eliminating an area that is physically difficult to detect. However, it should be noted that the figure illustrated in FIG. 9 is illustrative to help understanding and is not intended to be limiting.

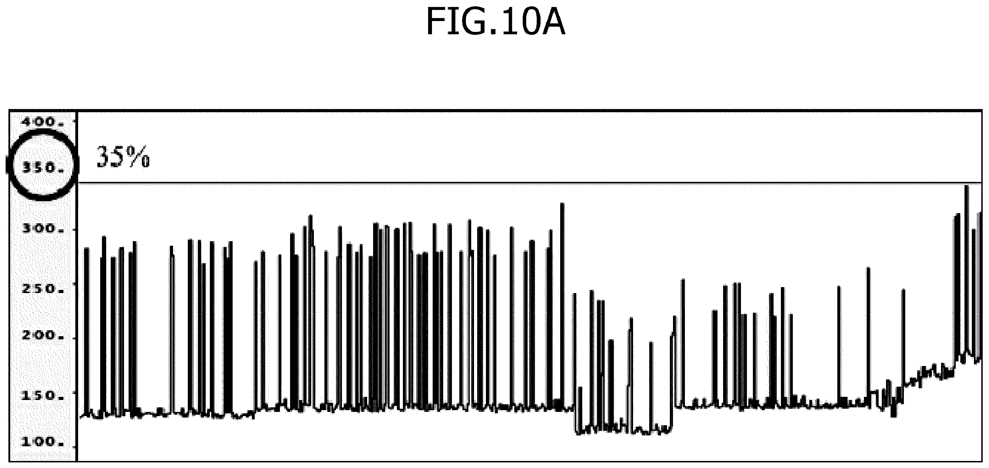

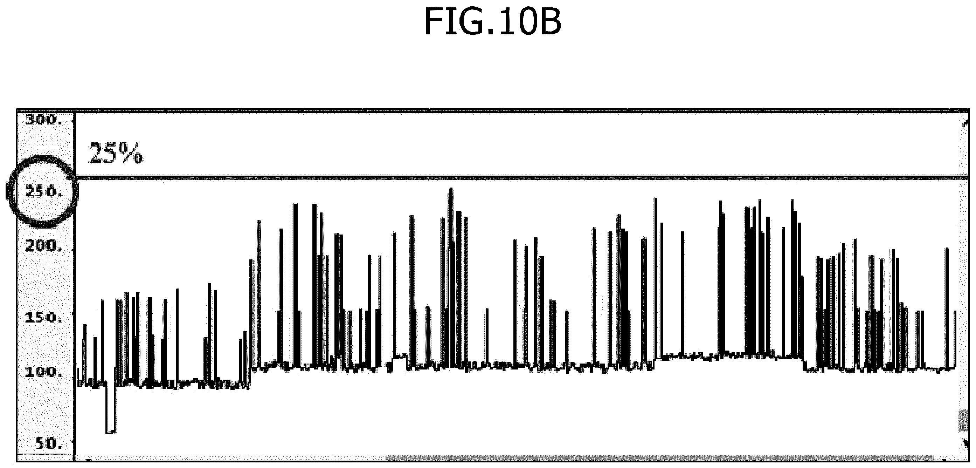

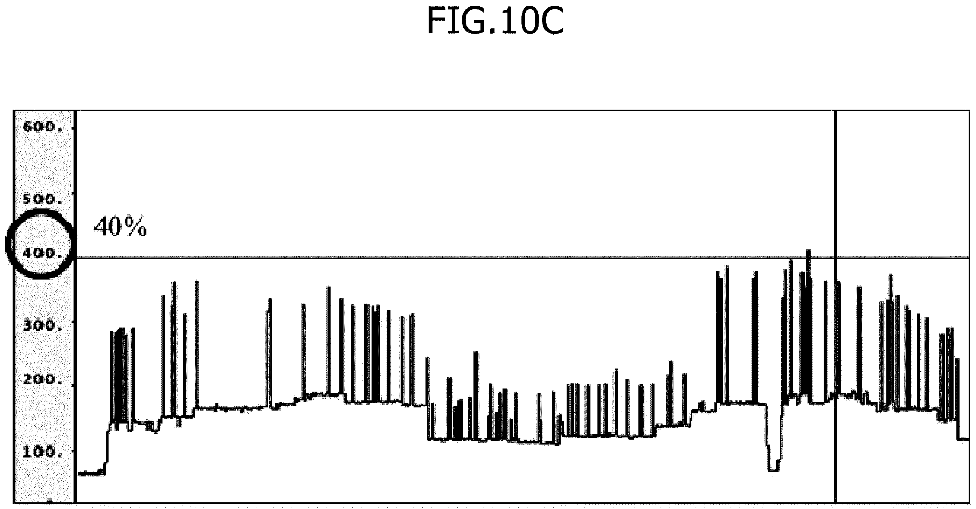

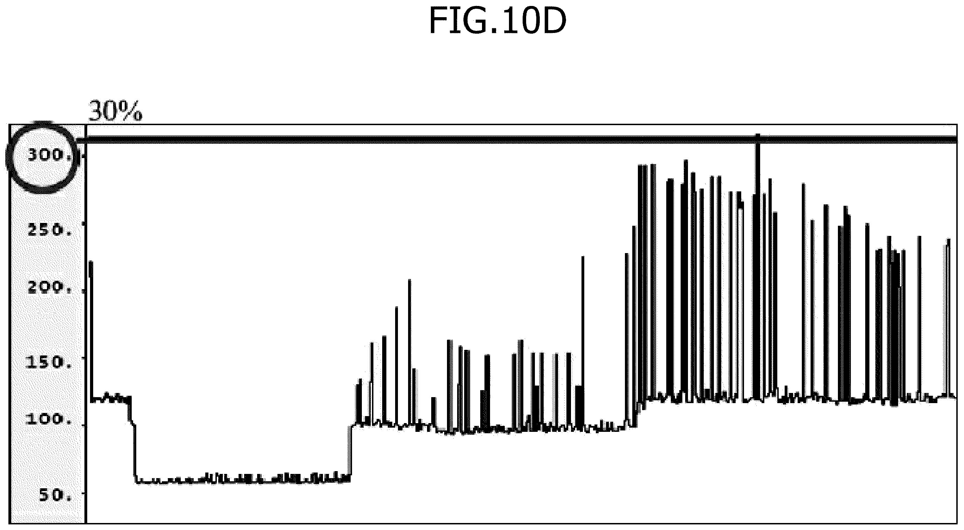

Graphs (a) and (b) in FIG. 10 show measurements of the load on the processor (e.g., an MCU) when a child dummy is present in a parking space. Graph (a) in FIG. 10 shows measurements of the load on a processor (e.g., an MCU) performing the conventional sensor fusion method, and shows that the load reaches up to 35% (i.e., when an object or a child dummy is present in a parking space, a large amount of sensor data is input such that a lot of computations are performed). Graph (b) in FIG. 10 shows measurements of the load on a processor (e.g., an MCU) performing the sensor fusion method according to the present embodiment, and shows that the load reaches up to 25%.

That is, when the sensor fusion method according to the present embodiment is performed, load on the processor (e.g., MCU) decreases by approximately 10 percentage points compared to the conventional method.

Graphs (c) and (d) in FIG. 10 show measurements of the load on a processor (e.g., an MCU) when a child dummy is present in front of a wall. Graph (c) in FIG. 10 shows measurements of the load on a processor (e.g., an MCU) performing the conventional sensor fusion method, and shows that the load reaches up to 40% (i.e., when an object or a child dummy is present in front of a wall, a large amount of sensor data is input such that a lot of computations are performed). Graph (d) in FIG. 10 shows measurements of the load on a processor (e.g., an MCU) performing the sensor fusion method according to the present embodiment, and shows that the load reaches up to 30%.

That is, when the sensor fusion method according to the present embodiment is performed, load on the processor (e.g., MCU) is reduced by approximately 10 percentage points compared to the conventional method.

As described above, the present embodiment may improve identification accuracy through robustness against noise compared to the conventional method by utilizing the FOV of the ultrasonic sensor and an intersection area of the direct wave when fusing the ultrasonic sensor and the camera sensor mounted on the transportation apparatus by using a grid map.

In addition, the present embodiment may reduce computational load on the processor compared to the conventional method by performing sensor fusion through a simple mathematical model when fusing sensing data from the ultrasonic sensor mounted on the transportation apparatus and image data from the camera sensor mounted on the transportation apparatus by using a grid map.

## Claims

1. A sensor fusion apparatus for a transportation apparatus, the sensor fusion apparatus comprising:
at least two sensors having different characteristics;
a first preprocessing module (110) and a second preprocessing module (120) performing grid mapping for each object through preprocessing, corresponding to the at least two sensors having different characteristics, respectively; and
a processor (130) performing sensor fusion through clustering using an integrated grid map for the each object pre-processed and grid-mapped by the first preprocessing module (110) and the second preprocessing module (120),
**characterized in that**:
the processor (130) performs clustering through an intersection of an object calculated through the first preprocessing module (110) and object box gating of an object calculated through the second preprocessing module (120), by using the integrated grid map,
wherein the intersection of an object being grid mapping information on an intersection area of direct and indirect waves acquired through the first sensor,
and wherein the object box gating of an object is inserting object information in the form of a box on the grid map, resulting in an object box, calculated through the second preprocessing module,
and
the processor (130) searches for occupancy scores of grids within the object box (OD_Box) and performs clustering with the average value of grids having the highest occupancy scores within the object box to calculate a final fusion representative point.

2. The sensor fusion apparatus of claim 1, wherein:
the first preprocessing module (110) performs Time of Flight (TOF) preprocessing and grid mapping for an object detected through an ultrasonic sensor, which is a first sensor, and
the second preprocessing module (120) performs object detection (OD) preprocessing and grid mapping for an object detected through a camera sensor, which is a second sensor.

3. The sensor fusion apparatus of claim 1 or 2, wherein the processor (130) determines the object box to be a ghost and deletes the same, if there is no grid mapping information from the first sensor accumulated within the object box.

4. The sensor fusion apparatus of any one of claims 1 to 3, wherein the processor (130) acquires a Time of Flight (TOF) value of a direct wave forming a circular pattern due to identical Time of Flight (TOF) values for transmitted and received ultrasonic waves and a TOF value of an indirect wave forming an elliptical pattern due to different Time of Flight (TOF) values for transmitted and received ultrasonic waves detected through the first sensor by using the first preprocessing module (110), and performs grid mapping aligned with a field of view (FOV) of the first sensor, if there is a direct wave value among the TOF values acquired through the first sensor.

5. The sensor fusion apparatus of claim 4, wherein the processor (130) performs grid mapping only on an intersection area of direct and indirect waves, if there is a TOF value of an indirect wave among the TOF values acquired through the first sensor.

6. The sensor fusion apparatus of any one of claims 1 to 5, wherein the processor (130) acquires object detection information from image data detected through the second sensor by using the second preprocessing module (120), and corrects a coordinate value and an area value based on a specified parameter by using a specified filter and then performs grid mapping in the form of a box if objects are confirmed to be the same through comparison of previous and current values of the object detection information.

7. The sensor fusion apparatus of any one of claims 1 to 6, wherein the processor (130) integrates grid mapping information on an intersection area of direct and indirect waves among TOF values acquired through a first sensor and grid mapping information in the form of an object box on object detection information detected through a second sensor, and maps all the information on a single integrated grid map, the direct wave forming a circular pattern due to identical Time of Flight (TOF) values for transmitted and received ultrasonic waves and the indirect wave forming an elliptical pattern due to different Time of Flight (TOF) values for transmitted and received ultrasonic waves.

8. A sensor fusion method for a transportation apparatus comprising:
performing, by a processor, preprocessing and grid mapping corresponding to a first sensor and a second sensor having different characteristics, respectively, by using a first preprocessing module and a second preprocessing module; and
performing, by the processor, sensor fusion through clustering using an integrated grid map for each object information preprocessed and grid-mapped by the first preprocessing module and the second preprocessing module,
**characterized in that** the
clustering is performed by the processor through an intersection of an object calculated through the first preprocessing module (110) and object box gating of an object calculated through the second preprocessing module (120), by using the integrated grid map,
wherein the intersection of an object being grid mapping information on an intersection area of direct and indirect waves acquired through the first sensor,
and wherein the object box gating of an object is inserting object information in the form of a box on the grid map, resulting in an object box, calculated through the second preprocessing module,
and that the processor searches for occupancy scores of grids within an object box (OD_Box), and performs clustering with the average value of grids having the highest occupancy scores within the object box to calculate a final fusion representative point.

## Patentansprüche

1. Sensorfusionsvorrichtung für eine Transportvorrichtung, wobei die Sensorfusionsvorrichtung umfasst:
mindestens zwei Sensoren mit unterschiedlichen Eigenschaften;
ein erstes Vorverarbeitungsmodul (110) und ein zweites Vorverarbeitungsmodul (120), die jeweils eine Rasterkartierung für jedes Objekt durch Vorverarbeitung entsprechend den mindestens zwei Sensoren mit unterschiedlichen Eigenschaften durchführen; und
einen Prozessor (130), der eine Sensorfusion durch Clustering unter Verwendung einer integrierten Rasterkarte für jedes Objekt durchführt, das durch das erste Vorverarbeitungsmodul (110) und das zweite Vorverarbeitungsmodul (120) vorverarbeitet und rasterkartiert wurde,
**dadurch gekennzeichnet, dass**:
der Prozessor (130) unter Verwendung der integrierten Rasterkarte ein Clustering anhand einer durch das erste Vorverarbeitungsmodul (110) berechneten Schnittmenge eines Objekts und eines Objektbox-Gatings eines durch das zweite Vorverarbeitungsmodul (120) berechneten Objekts durchführt,
wobei die Schnittmenge eines Objekts Rasterkartierungsinformationen über einen Schnittbereich von durch den ersten Sensor erfassten Direkt- und Indirektwellen darstellt, und
wobei das Objektbox-Gating eines Objekts ein Einfügen von Objektinformationen in Form einer Box in die Rasterkarte ist, wodurch eine durch das zweite Vorverarbeitungsmodul berechnete Objektbox erhalten wird, und
der Prozessor (130) nach Belegungswerten von Rasterzellen innerhalb der Objektbox (OD_Box) sucht und ein Clustering mit dem Mittelwert der Rasterzellen mit den höchsten Belegungswerten innerhalb der Objektbox durchführt, um einen endgültigen repräsentativen Fusionspunkt zu berechnen.

2. Sensorfusionsvorrichtung nach Anspruch 1, wobei:
das erste Vorverarbeitungsmodul (110) eine Laufzeit-, TOF-, Vorverarbeitung und eine Rasterkartierung für ein durch einen Ultraschallsensor, der ein erster Sensor ist, detektiertes Objekt durchführt, und
das zweite Vorverarbeitungsmodul (120) eine Objekterkennungs-, OD-, Vorverarbeitung und eine Rasterkartierung für ein durch einen Kamerasensor, der ein zweiter Sensor ist, detektiertes Objekt durchführt.

3. Sensorfusionsvorrichtung nach Anspruch 1 oder 2, wobei der Prozessor (130) die Objektbox als Geisterobjekt bestimmt und diese löscht, wenn innerhalb der Objektbox keine von dem ersten Sensor stammenden Rasterkartierungsinformationen akkumuliert sind.

4. Sensorfusionsvorrichtung nach einem der Ansprüche 1 bis 3, wobei der Prozessor (130) unter Verwendung des ersten Vorverarbeitungsmoduls (110) einen Laufzeit-, TOF-, Wert einer durch den ersten Sensor detektierten Direktwelle, die aufgrund identischer Laufzeit-, TOF-, Werte für gesendete und empfangene Ultraschallwellen ein kreisförmiges Muster bildet, und einen TOF-Wert einer durch den ersten Sensor detektierten Indirektwelle, die aufgrund unterschiedlicher Laufzeit-, TOF-, Werte für gesendete und empfangene Ultraschallwellen ein elliptisches Muster bildet, erfasst und eine an einem Sichtfeld, FOV, des ersten Sensors ausgerichtete Rasterkartierung durchführt, wenn unter den durch den ersten Sensor erfassten TOF-Werten ein Direktwellenwert vorhanden ist.

5. Sensorfusionsvorrichtung nach Anspruch 4, wobei der Prozessor (130) eine Rasterkartierung nur für einen Schnittbereich von Direkt- und Indirektwellen durchführt, wenn unter den durch den ersten Sensor erfassten TOF-Werten ein TOF-Wert einer Indirektwelle vorhanden ist.

6. Sensorfusionsvorrichtung nach einem der Ansprüche 1 bis 5, wobei der Prozessor (130) unter Verwendung des zweiten Vorverarbeitungsmoduls (120) Objekterkennungsinformationen aus durch den zweiten Sensor detektierten Bilddaten gewinnt und unter Verwendung eines vorgegebenen Filters einen Koordinatenwert und einen Flächenwert auf Grundlage eines vorgegebenen Parameters korrigiert und anschließend eine Rasterkartierung in Form einer Box durchführt, wenn durch einen Vergleich vorheriger und aktueller Werte der Objekterkennungsinformationen bestätigt wird, dass die Objekte identisch sind.

7. Sensorfusionsvorrichtung nach einem der Ansprüche 1 bis 6, wobei der Prozessor (130) Rasterkartierungsinformationen über einen Schnittbereich von Direkt- und Indirektwellen unter den durch einen ersten Sensor erfassten TOF-Werten und Rasterkartierungsinformationen in Form einer Objektbox für durch einen zweiten Sensor detektierte Objekterkennungsinformationen integriert und sämtliche Informationen auf eine einzige integrierte Rasterkarte abbildet, wobei die Direktwelle aufgrund identischer Laufzeit-, TOF-, Werte für gesendete und empfangene Ultraschallwellen ein kreisförmiges Muster bildet und die Indirektwelle aufgrund unterschiedlicher Laufzeit-, TOF-, Werte für gesendete und empfangene Ultraschallwellen ein elliptisches Muster bildet.

8. Sensorfusionsverfahren für eine Transportvorrichtung, umfassend:
Durchführen, durch einen Prozessor, einer Vorverarbeitung und einer Rasterkartierung entsprechend einem ersten Sensor beziehungsweise einem zweiten Sensor mit voneinander unterschiedlichen Eigenschaften unter Verwendung eines ersten Vorverarbeitungsmoduls beziehungsweise eines zweiten Vorverarbeitungsmoduls; und
Durchführen, durch den Prozessor, einer Sensorfusion durch Clustering unter Verwendung einer integrierten Rasterkarte für jede Objektinformation, die durch das erste Vorverarbeitungsmodul und das zweite Vorverarbeitungsmodul vorverarbeitet und rasterkartiert wurde,
**dadurch gekennzeichnet, dass**
das Clustering durch den Prozessor unter Verwendung der integrierten Rasterkarte anhand einer durch das erste Vorverarbeitungsmodul (110) berechneten Schnittmenge eines Objekts und eines Objektbox-Gatings eines durch das zweite Vorverarbeitungsmodul (120) berechneten Objekts durchgeführt wird,
wobei die Schnittmenge eines Objekts Rasterkartierungsinformationen über einen Schnittbereich von durch den ersten Sensor erfassten Direkt- und Indirektwellen darstellt, und
wobei das Objektbox-Gating eines Objekts ein Einfügen von Objektinformationen in Form einer Box in die Rasterkarte ist, wodurch eine durch das zweite Vorverarbeitungsmodul berechnete Objektbox erhalten wird, und
dass der Prozessor nach Belegungswerten von Rasterzellen innerhalb einer Objektbox (OD_Box) sucht und
ein Clustering mit dem Mittelwert der Rasterzellen mit den höchsten Belegungswerten innerhalb der Objektbox durchführt, um einen endgültigen repräsentativen Fusionspunkt zu berechnen.

## Revendications

1. Appareil de fusion de capteurs pour un moyen de transport, l'appareil de fusion de capteurs comprenant:
au moins deux capteurs ayant des caractéristiques différentes;
un premier module de prétraitement (110) et un second module de prétraitement (120) effectuant une cartographie par grille pour chaque objet par prétraitement, correspondant à l'au moins deux capteurs ayant respectivement des caractéristiques différentes; et
un processeur (130) effectuant une fusion de capteurs par regroupement à l'aide d'une carte quadrillée intégrée pour chaque objet prétraité et cartographié par grille par le premier module de prétraitement (110) et le second module de prétraitement (120),
**caractérisé en ce que** :
le processeur (130) effectue un regroupement par intersection d'un objet calculé par le premier module de prétraitement (110) et d'un filtrage de boîte d'objet d'un objet calculé par le second module de prétraitement (120), en utilisant la carte quadrillée intégrée,
dans lequel l'intersection correspondant à des informations de cartographie par grille, se situe dans une zone d'intersection entre les ondes directes et indirectes acquises par le premier capteur,
et dans lequel le filtrage de boîte d'objet d'un objet consiste à insérer des informations d'objet sous la forme d'un boîte sur la carte quadrillée, ce qui donne lieu à une boîte d'objet, calculée par le second module de prétraitement,
et
le processeur (130) recherche les scores d'occupation de grille dans la boîte d'objet (OD_Box) et effectue un regroupement à l'aide de la valeur moyenne des grilles présentant les scores d'occupation les plus élevés à l'intérieur de la boîte d'objet pour calculer un point représentatif de fusion finale.

2. Appareil de fusion de capteurs selon la revendication 1, dans lequel:
le premier module de prétraitement (110) effectue le prétraitement de temps de vol (TOF) et la cartographie par grille d'un objet détecté par un capteur à ultrasons, qui est un premier capteur, et
le second module de prétraitement (120) effectue le prétraitement de détection d'objet (OD) et la cartographie par grille pour un objet détecté par un capteur de caméra, qui est un second capteur.

3. Appareil de fusion de capteurs selon la revendication 1 ou 2, dans lequel le processeur (130) identifie la boîte d'objet comme étant un fantôme et la supprime s'il n'y a pas d'informations de cartographie de grille provenant du premier capteur accumulées à l'intérieur de la boîte d'objet.

4. Appareil de fusion de capteurs selon l'une quelconque des revendications 1 à 3, dans lequel le processeur (130) acquiert une valeur de temps de vol (TOF) d'une onde directe formant un motif circulaire, en raison de valeurs de temps de vol (TOF) identiques pour les ondes ultrasonores émises et reçues, et une valeur de temps de vol (TOF) d'une onde indirecte formant un motif elliptique, en raison de valeurs de temps de vol (TOF) différentes pour les ondes ultrasonores émises et reçues, détectées par le premier capteur à l'aide du premier module de prétraitement (110), et effectue une cartographie par grille alignée sur le champ de vision (FOV) du premier capteur, s'il existe une valeur d'onde directe parmi les valeurs de temps de vol (TOF) acquises par le premier capteur.

5. Appareil de fusion de capteurs selon la revendication 4, dans lequel le processeur (130) effectue la cartographie par grille uniquement sur la zone d'intersection des ondes directes et indirectes, s'il existe une valeur de temps de vol (TOF) d'une onde indirecte parmi les valeurs TOF acquises par le premier capteur.

6. Appareil de fusion de capteurs selon l'une quelconque des revendications 1 à 5, dans lequel le processeur (130) acquiert des informations de détection d'objet à partir de données d'image détectées par le second capteur à l'aide du second module de prétraitement (120), et corrige une valeur de coordonnée et une valeur de surface en fonction d'un paramètre spécifié à l'aide d'un filtre spécifié, puis effectue une cartographie par grille sous la forme d'une boîte s'il est confirmé que les objets sont identiques après comparaison des valeurs précédentes et actuelles des informations de détection d'objets.

7. Appareil de fusion de capteurs selon l'une quelconque des revendications 1 à 6, dans lequel le processeur (130) intègre les informations de cartographie par grille relatives à une zone d'intersection des ondes directes et indirectes parmi les valeurs TOF acquises par un premier capteur, et les informations de cartographie par grille sous la forme d'une boîte d'objet, sur des informations de détection d'objet captées par un second capteur, et cartographie l'ensemble des informations sur une seule carte quadrillée intégrée, l'onde directe formant un motif circulaire en raison de valeurs de temps de vol (TOF) identiques pour les ondes ultrasonores émises et reçues, et l'onde indirecte formant un motif elliptique en raison de valeurs de temps de vol (TOF) différentes pour les ondes ultrasonores émises et reçues.

8. Procédé de fusion de capteur pour un moyen de transport comprenant:
la réalisation, par un processeur, d'un prétraitement et d'une cartographie par grille correspondant respectivement à un premier capteur et à un second capteur ayant des caractéristiques différentes, à l'aide d'un premier module de prétraitement et d'un second module de prétraitement; et
la réalisation, par le processeur, de la fusion de capteurs par regroupement à l'aide d'une carte quadrillée intégrée pour chaque information d'objet prétraité et cartographié par grille par le premier module de prétraitement et le second module de prétraitement,
**caractérisé en ce que** le regroupement est effectué par le processeur par intersection d'un objet calculé par le premier module de prétraitement (110) et d'un filtrage de boîte d'objet d'un objet calculé par le second module de prétraitement (120), en utilisant la carte quadrillée intégrée,
dans lequel l'intersection correspondant à des informations de cartographie par grille, se situe dans une zone d'intersection entre les ondes directes et indirectes acquises par le premier capteur,
et dans lequel le filtrage de boîte d'objet d'un objet consiste à insérer des informations d'objet sous la forme d'un boîte sur la carte quadrillée, ce qui donne lieu à une boîte d'objet, calculée par le second module de prétraitement,
et **en ce que** le processeur recherche des scores d'occupation de grilles dans une boîte d'objet (OD_Box), et
effectue un regroupement à partir de la valeur moyenne des grilles ayant les scores d'occupation les plus élevés dans la boîte d'objet pour calculer un point représentatif de fusion finale.
